**Europäisches Patentamt**

**European Patent Office**

**Office européen des brevets**

(19)

(11) Publication number : **0 350 989 B1**

# (12) EUROPEAN PATENT SPECIFICATION

(45) Date of publication of patent specification :
**09.12.92 Bulletin 92/50**

(51) Int. Cl.⁵ : **C01B 31/04**

(21) Application number : **89201711.2**

(22) Date of filing : **28.06.89**

(54) **Method and apparatus for manufacturing flake graphite.**

(30) Priority : **11.07.88 NL 8801749**

(43) Date of publication of application :
**17.01.90 Bulletin 90/03**

(45) Publication of the grant of the patent :
**09.12.92 Bulletin 92/50**

(84) Designated Contracting States :
**AT BE DE ES FR GB IT LU NL**

(56) References cited :
**US-A- 1 420 512**
**US-A- 1 434 519**

(56) References cited :
**CHEMICAL ABSTRACTS, vol. 96, no. 18, 3rd
May 1982, page 156, abstract no. 145381s,
Columbus, Ohio, US; & JP-A-82 07 807
CHEMICAL ABSTRACTS, vol. 105, no. 4, 28th
July 1986, page 140, abstract no. 26569d, Col-
umbus, Ohio, US; & JP-A-85 246 214**

(73) Proprietor : **HOOGOVENS GROEP B.V.**
**P.O. Box 10.000**
**NL-1970 CA IJmuiden (NL)**

(72) Inventor : **Butter, Johannes Adrianus Maria**
**Koperwiekstraat 44**
**NL-1911 XK Uitgeest (NL)**

(74) Representative : **Wentzel, Hendrik Cornelis et
al**
**Hoogovens Groep B.V. P.O. Box 10.000**
**NL-1970 CA IJmuiden (NL)**

## Description

This invention relates to a method and apparatus for manufacturing flake graphite, in which carbon is dissolved in a metal melt, typically an iron-based melt, and the melt is cooled to crystallize flake graphite out.

In this specification flake graphite is understood to be graphite with a particle size predominantly larger than 0.05 mm. Flake graphite consists essentially of carbon with a characteristic anisotropic crystalline structure composed of layers with a hexagonal crystal lattice.

Flake graphite is obtained from natural sources. Nowadays flake graphite is much used in refractory bricks. At present the demand for flake graphite is exceeding supply.

Proposals have been made to make flake graphite by crystallizing it from a carbon-saturated metal melt, in particular an iron melt. Iron has an appropriate increase of carbon solubility with increasing temperature. Early examples of such proposals are US-A-1420512 and U-S-A-1434519. Iron is heated in a first vessel, coke or other carbon is then added and dissolved, and the iron is passed into a second vessel, where it is cooled and the crystallized graphite is removed by circulation of a non-oxidizing gas.

JP-A-57-7807 describes a process where the molten iron is maintained under inert gas, to restrict slag formation in a repeated heating/cooling cycle. Non-oxidizing gas is blown in through tuyeres at the bottom of the vessel, this gas being externally cooled during the cooling step. Heating is electrical, a high-frequency furnace or an electric arc furnace (non-oxidative) being used. Various sources of carbon are mentioned, not including coal. The carbon source may be introduced via a tuyere entrained in an inert gas stream.

JP-A-60-246214 discloses a process in which a carbon source, such as coal, is thrown onto the metal bath and oxygen is blown onto the carbon surface so that the carbon is burned. The heat released heats the iron melt and at the same time part of the carbon is dissolved. Argon is blown into the melt to cool it and remove the graphite produced. The floating slag does not impede the removal of graphite with the inert gas. In this method there is difficulty in dissolving the carbon adequately in the melt.

The object of the present invention is to provide improvements in a process and apparatus for manufacturing flake graphite in which carbon is burned to heat the metal melt and part of the carbon dissolves in the melt, whereafter the melt is cooled so that flake graphite crystallizes out.

According to the present invention, coal is added by injecting pulverized coal directly into the melt beneath the surface of the melt and the pulverized coal is burned in the melt by the oxygen supplied. Here, pulverized coal means natural coal of suitable quality in a finely divided form. Preferably the pulverized coal is at least 70% by weight of particles of size less than 1 mm, more preferably less than 0.3 mm, most preferably less than 0.1 mm. This form of natural coal dissolves very rapidly in the melt. The pulverized coal is preferably injected by means of an inert gas, e.g. nitrogen.

The advantages obtained with the invention are that the pulverized natural coal is rapidly dissolved into the melt up to saturation at the temperature of the melt, and that the heating by means of oxygen is highly efficient. Additional advantages of burning the coal in the melt, not on top of the melt, are that a rich exhaust gas containing hydrogen and CO is obtained, and that the temperature of this exhaust gas is lower.

For the metal melt various metals and metallic compounds (such as metal carbides) are conceivable. Such metallic compounds are included within the term "metal melt" used in this description and claims. The metal melt must fulfil a number of requirements. The solubility of carbon must be sufficiently high. The temperature of the process should not be so high that refractory problems arise. The saturation line in the phase diagram must be sufficiently flat that an acceptable quantity of flake graphite crystallizes out of the melt.

The metals nickel, lithium and cobalt certainly fulfil such requirements. However, preference is for a melt based on iron, and more preferably pig iron is used. In the iron/carbon diagram the working range of the cooling step of the method lies close to the saturation line of liquid iron and carbon at a carbon percentage higher than that of the eutectic at 4.26%C. If necessary the pig iron, which may contain a number of impurities such as phosphorus and sulphur, may first be refined.

For the solution of carbon in the melt, as mentioned pulverized coal is injected beneath the surface of the melt. In steel production there has already been experience with such injection, for example in an OBM converter in which pulverized coal is injected through the bottom of the converter.

To avoid high investment for electrical heating and the high energy costs of electrical heating, in the invention the melt is heated by combustion of carbon in the melt by oxygen. For this the oxygen may be injected into the melt. Alternatively, the oxygen needed may be fed from above onto the melt with an oxygen blowing lance, for example of a type such as is used in the production of steel in an oxygen steel converter. However, it is important that the combustion occurs in the melt, rather than only on the top of the melt.

The preferred process temperature with a melt based on iron is in the temperature range of 1200-1600°C. Above 1600°C refractory problems become greater. More preferably the melt is heated to approximately 1500°C and then cooled down to approximately 1300°C.

As to procedure, the melt may be heated periodically and cooled periodically in one and the same vessel. Investment needed for this is comparatively low. However the alternating temperature in the vessel imposes extra demands on the refractory lining of the vessel.

The method of the invention is preferably carried out in at least two vessels, and in such a way that the melt is heated in a first vessel, is transferred in heated condition to a second vessel and is cooled in the second vessel, and the crystallized graphite separated, e.g. in the second vessel. The melt is then transferred back to the first vessel in cooled condition. The solution of the carbon in the melt may take place either in the first vessel or both the first vessel and in a third vessel after the melt is heated in the first vessel.

While the melt is being heated by combustion of carbon in the first vessel (the heating vessel) a slag forms on the melt. Because of the violent movement of the melt in the first vessel, particles of slag are conveyed in the melt to the second vessel (the cooling vessel). So, after it is heated in the first vessel, but before being cooled in the second vessel the melt may be taken to a third vessel where slag brought with it from the first vessel is separated.

In order to prevent oxidation of the melt and the graphite in the cooling vessel, an inert atmosphere is preferred in the cooling vessel. This may be achieved if, for example, inert gas is injected into the melt in the second vessel in order to stir the melt.

The melt may be allowed to flow back and forth periodically between the first and second vessels, or it is allowed to circulate continuously through the vessels.

An agent which encourages the growth of the flake graphite, preferably hydrogen, nitrogen and/or silicon, may be added to the melt.

If necessary the graphite obtained may then be purified. Impurities in the graphite, such as for example $Fe_2O_3$ or $Fe_3O_4$ may be dissolved with HCl (hydrochloric acid), followed by washing with HF (hydrogen fluoride).

The invention will be illustrated in a non-limitative manner with reference to the drawings and by an Example.

In the drawings:

Fig. 1 shows diagrammatically the process and apparatus in accordance with the invention, in one specific embodiment.

Fig. 2 shows the cycle in the iron/carbon diagram undergone by the melt in the process in accordance with Fig. 1.

Fig. 3 shows diagrammatically the method and apparatus in accordance with the invention, in another specific embodiment.

Fig. 4 shows the cycle in the iron/carbon diagram undergone by the melt in the process in accordance with Fig. 3.

Fig. 5 shows in more detail an apparatus of the invention which can be used in the method of the specific embodiment of Fig. 1.

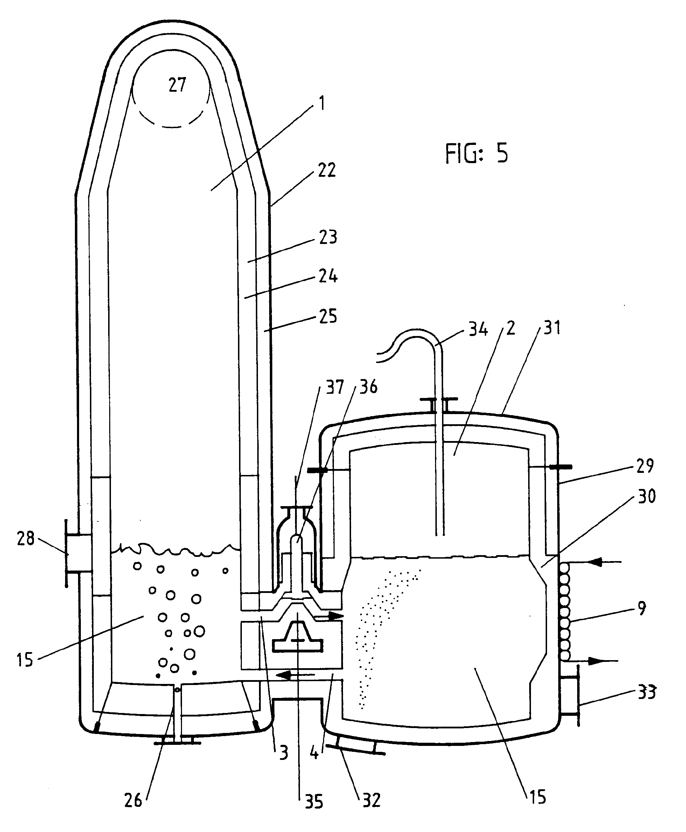

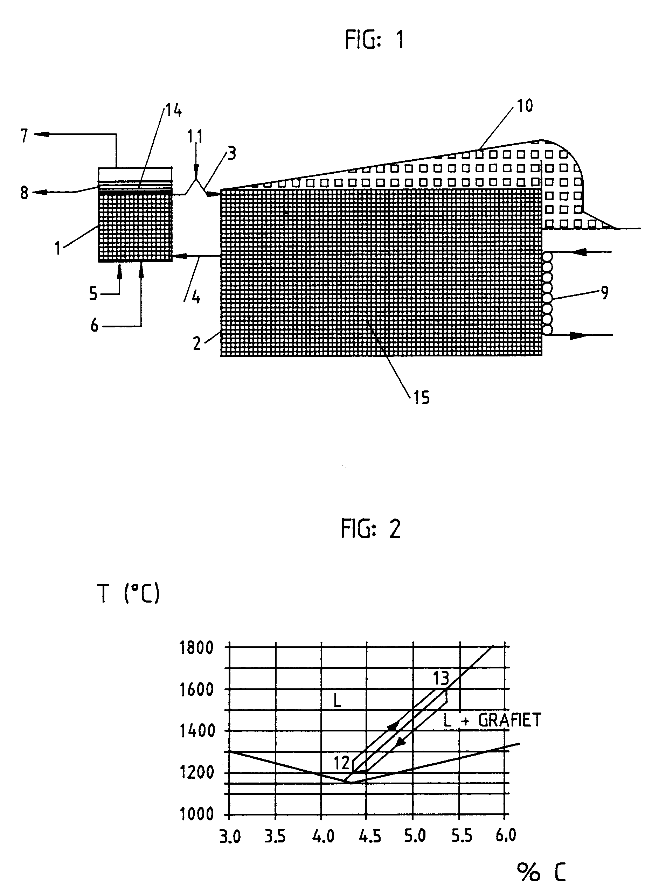

In the diagram of Fig. 1 there is shown a heater vessel 1 and a cooler vessel 2 which are linked together by connecting pipes 3 and 4. The system comprising heater 1, cooler 2 and pipes 3 and 4 is filled with a melt 15 based on iron. The melt is heated in the heater 1 and at the same time carbon is dissolved into the melt in the heater 1. To this end the heater 1 is supplied with oxygen via a supply conduit 5 and carbon in the form of pulverized coal carried by inert gas via a supply conduit 6. The supply conduits 5 and 6 inject oxygen and coal directly into the melt through the bottom of the vessel 1. By the combustion of the carbon in the melt with oxygen a combustion gas is produced, in this case a high calorific gas consisting predominantly of CO, which is taken off from the heater at 7 and which may be used in generating energy. The slag 14 formed in the heater 1 may be drained from the heater at 8.

In the cooler 2 the melt is cooled, for example by means of a cooling system 9 indicated diagrammatically, so that flake graphite crystallizes out of the melt. The cooling rate may be adjusted in dependence on the desired dimensions of the graphite flakes. The graphite released is indicated diagrammatically by 10.

Arrows indicate the continuous circulation of the melt through the system comprising heater 1, cooler 2 and pipes 3 and 4. A regulator 11 is shown by which the circulation rate of the melt may be regulated.

Fig. 2 shows the part of the iron/carbon diagram of importance for the process of Fig. 1, with the vertical axis indicating the temperature of the melt in °C and the horizontal axis the carbon content of the melt in percentage by weight. The melt is heated and carbon dissolved in the heater 1. In this the melt follows the line in Fig. 2 from 12 to 13 in the direction indicated by an arrow. The melt is cooled in the cooler 2 according to the line 13 to 12 in Fig. 2. This reduces the carbon content of the melt because flake graphite crystallizes out.

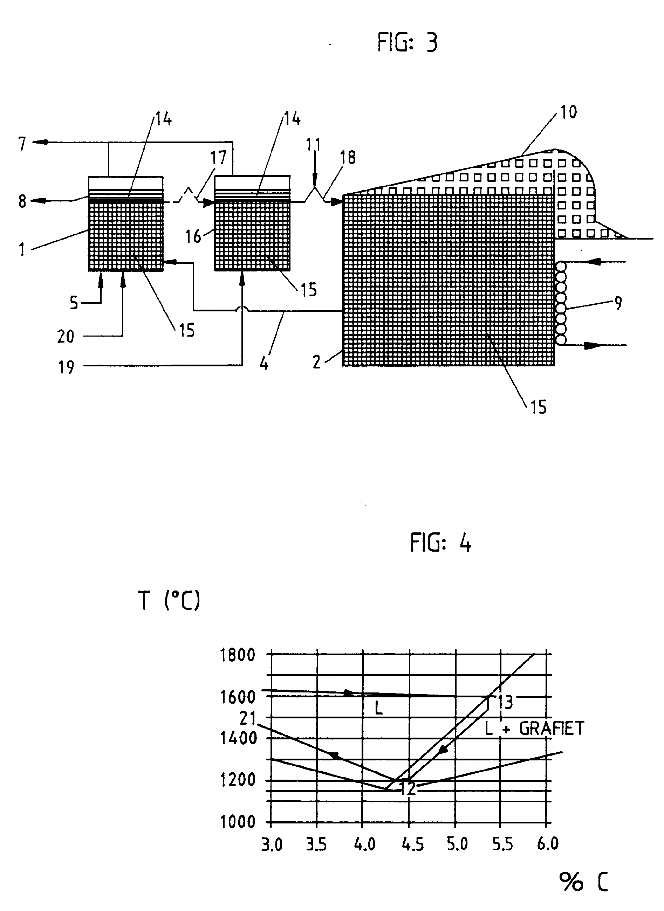

Fig. 3 shows a variation of the process of Fig. 1 with a carbonizer vessel 16 with connecting pipes 17 and 18 respectively between the heater vessel 1 and the carbonizer 16 and between the carbonizer 16 and the cooler vessel 17. Carbon in the form of pulverized coal is fed to the carbonizer 16 through a conduit 19 and is dissolved into the melt in the carbonizer 16. As in Fig. 1, the melt is heated in the heater 1 by combustion of carbon fed to the heater 1 via a conduit 20. Inert gas carries the coal in the conduits 19,20. In this process the gas taken off at 7 may consist predominantly of $CO_2$. In this process the melt in the heater 1 may follow the line in Fig. 4 from 12 to 21, the temperature rising and the carbon content falling, and follows the line from 21 to 13 in the carbonizer 16, the carbon content increasing.

Fig. 5 shows in more detail an apparatus in which the process of Fig. 1 can be performed, with a number of specific details which may also be applied to other embodiments. The heater 1 is built as a steel vessel 22, provided internally with a refractory lining 23 comprising a wearing lining 24 and a permanent lining 25. The supply of carbon and oxygen takes place as pulverized coal and oxygen injection, via one or more injectors consisting of double walled concentric injection nozzles 26 through the bottom of the vessel 22. In the double walled concentric nozzle injector 26, the central nozzle carries oxygen and the surrounding nozzle carries pulverized coal and inert gas. The combustion gas is taken off at 27. The gas take-off may, if the vessel 22 is open at the top, for example be built in the form of a hood such as is used for an oxygen steel converter. The vessel 22 is provided with a branch connection 28 for tapping off slag. The drawing does not show that there may also be a provision for supplying chalk to the vessel 22 for conditioning the slag.

The cooler vessel 2 is likewise built as a steel vessel 29 with a refractory lining 30. The cooler 2 is provided with a cover 31 which may be removed in order to fill the apparatus may be filled with melt 15. The cooler has a connection 32 through which inert gas may be injected and a connection 33 for tapping off the melt 15. To separate the crystallized flake graphite floating on the melt, the cover 31 is provided with a suction pipe 34 by which the flake graphite may be sucked out.

Between heater 1 and cooler 2 a natural circulation takes place through conduits 3 and 4 as a result of the difference in the change of the hydrostatic pressure as a result of oxygen injection in the heater (bubble pump). Naturally, the melt may also be pumped in another manner.

There is a sill 35 incorporated in the pipe 3. By regulating the gas pressure in a chamber 36 above the sill 35 via a conduit 37, the height of the melt above the sill 35, and consquently the circulation rate may be regulated.

EXAMPLE

In apparatus according to Fig. 5, 100 tons of molten pig iron are used as the metal melt. The process is operated continuously, with addition of pulverized natural coal (of 70% by weight of particle size less than 0.1 mm) at a rate of 200 tons per 24 hours. Oxygen is blown in continuously at a rate of 10000 Nm$^3$/h. Heating is to 1500°C, cooling to 1300°C. The amount of graphite produced is 30 tons per 24 hours.

**Claims**

1. Method of manufacturing flake graphite wherein coal is added to a metal melt (15) and is partly burned using oxygen in order to heat the melt and is partly dissolved in the melt to raise the carbon content of the metal, whereafter the melt is cooled so that flake graphite crystallizes out, characterized in that the coal is added by injecting pulverized coal directly into the melt beneath the surface of the melt and in that the pulverized coal is burned in the melt by the oxygen.

2. Method in accordance with claim 1, wherein the metal melt is heated by the burning of pulverized coal in a first vessel (1), the melt is transferred in heated condition to a second vessel (2), the melt is cooled in the second vessel, the crystallized graphite is separated and the melt is transferred back to the first vessel (1) in cooled condition.

3. Method in accordance with claim 2 wherein after it is heated in the first vessel (1), but before being cooled in the second vessel, the melt is conveyed to a third vessel where slag conveyed with it from the first vessel (1) is separated from it.

4. Method in accordance with claim 2 or claim 3 wherein after the melt is heated in the first vessel (1) further carbon is dissolved in the melt in a fourth vessel (16).

5. Method in accordance with any one of claims 2 to 4 wherein the melt is allowed to circulate continuously through the vessels.

6. Method in accordance with any one of claims 1 to 5 wherein the pulverized coal is injected into the melt by means of at least one tuyere (26) and/or a lance.

7. Method in accordance with any one of claims 1 to 6 wherein the oxygen is injected into the melt.

8. Method in accordance with claim 7 wherein the oxygen is injected into the melt by an oxygen blowing lance.

9. Method in accordance with any one of claims 1 to 8 wherein the pulverized coal comprises at least 70% by weight of particles of size smaller than 1 mm.

10. Method in accordance with claim 9 wherein the pulverized coal comprises at least 70% by weight of particles of size smaller than 0.3 mm.

11. Method in accordance with claim 10 wherein the pulverized coal comprises at least 70% by weight of particles of size smaller than 0.1 mm.

12. Method in accordance with any one of claims 1 to 11 wherein the melt is iron-based.

13. Method in accordance with claim 12 wherein the melt is pig iron.

14. Apparatus for carrying out the method of claim 1 having at least one vessel (1,2) for holding a metal melt (15), means (16,19,20,26) for injecting pulverized coal directly into the metal melt, means (5,26) for introducing oxygen into the melt, means (9) for cooling the melt and means (31,34) for separating flake graphite from the melt.

15. Apparatus according to claim 14 having at least a first vessel (1) for heating the melt having said coal-injecting means and said oxygen introducing means and a second vessel (2) for cooling the melt having said cooling means.

**Patentansprüche**

1. Verfahren zur Herstellung von lamellarem Graphit, bei dem Kohle einer Metallschmelze (15) zugegeben und teilweise unter Verwendung von Sauerstoff verbrannt wird, um die Schmelze zu erhitzen, und teilweise in der Schmelze gelöst wird, um den Kohlenstoffgehalt des Metalls zu erhöhen, wonach die Schmelze abgekühlt wird, so daß lamellarer Graphit auskristallisiert, dadurch gekennzeichnet, daß die Kohle zugegeben wird, indem pulverisierte Kohle direkt in die Schmelze unterhalb der Oberfläche der Schmelze eingepreßt wird, und daß die pulverisierte Kohle in der Schmelze durch Sauerstoff verbrannt wird.

2. Verfahren nach Anspruch 1, dadurch gekennzeichnet, daß die Metallschmelze erhitzt wird, indem die pulverisierte Kohle in einem ersten Kessel (1) verbrannt, die Schmelze in erhitztem Zustand einem zweiten Kessel (2) zugeführt, die Schmelze in dem zweiten Kessel abgekühlt, der kristallisierte Graphit abgetrennt und die Schmelze in gekühltem Zustand zurück in den ersten Kessel (1) transportiert wird.

3. Verfahren nach Anspruch 2, dadurch gekennzeichnet, daß nachdem die Schmelze in dem ersten Kessel (1) erhitzt worden ist, jedoch bevor sie in dem zweiten Kessel abgekühlt wird, die Schmelze zu einem dritten Kessel gefördert wird, wo mit ihr von dem ersten Kessel (1) transportierte Schlacke von ihr abgetrennt wird.

4. Verfahren nach Anspruch 2 oder 3, dadurch gekennzeichnet, daß nachdem die Schmelze in dem ersten Kessel (1) erhitzt worden ist, weiterer Kohlenstoff in der Schmelze in einem vierten Kessel (16) gelöst wird.

5. Verfahren nach einem der Ansprüche 2 bis 4, dadurch gekennzeichnet, daß es der Schmelze gestattet ist, kontinuierlich durch die Kessel zu zirkulieren.

6. Verfahren nach einem der Ansprüche 1 bis 5, dadurch gekennzeichnet, daß die pulverisierte Kohle in die Schmelze durch mindestens ein Rohr (26) und/oder eine Lanze eingepreßt wird.

7. Verfahren nach einem der Ansprüche 1 bis 6, dadurch gekennzeichnet, daß der Sauerstoff in die Schmelze eingepreßt wird.

8. Verfahren nach Anspruch 7, dadurch gekennzeichnet, daß der Sauerstoff in die Schmelze durch eine Sauerstoffblaslanze eingepreßt wird.

9. Verfahren nach einem der Ansprüche 1 bis 8, dadurch gekennzeichnet, daß die pulverisierte Kohle mindestens zu 7Ø Gew.% Partikel von einer Größe kleiner als 1 mm aufweist.

10. Verfahren nach Anspruch 9, dadurch gekennzeichnet, daß die pulverisierte Kohle mindestens 7Ø Gew.% Partikel von einer Größe kleiner als Ø,3 mm aufweist.

11. Verfahren nach Anspruch 1Ø, dadurch gekennzeichnet, daß die pulverisierte Kohle mindestens zu 7Ø Gew..% Partikel von einer Größe kleiner als Ø,1 mm aufweist.

12. Verfahren nach einem der Ansprüche 1 bis 11, dadurch gekennzeichnet, daß die Schmelze auf Eisen basiert.

13. Verfahren nach Anspruch 12, dadurch gekennzeichnet, daß die Schmelze Roheisen ist.

14. Anlage zum Durchführen des Verfahrens nach Anspruch 1, mit wenigstens einem Kessel (1, 2) zum Halten einer Metallschmelze (15), Einrichtungen (16, 19, 2Ø, 26) zum Einpressen von pulverisierter Kohle direkt in die Metallschmelze, Einrichtungen (5, 26) zum Einführen von Sauerstoff in die Schmelze, einer Einrichtung (9) zum Abkühlen der Schmelze und einer Einrichtung (31, 34) zum Abtrennen des lamellaren Graphits von der Schmelze.

**15.** Anlage nach Anspruch 14,
mit mindestens einem ersten Kessel (1) zum Aufheizen der Schmelze, der die Kohleeinpreßeinrichtung und die Sauerstoffeinbringeinrichtung aufweist, und einem zweiten Kessel (2) zum Abkühlen der Schmelze, der die Abkühleinrichtung aufweist.

## Revendications

**1.** Procédé de fabrication de graphite en flocons, dans lequel du charbon est ajouté à un métal en fusion (15) et est partiellement brûlé en utilisant de l'oxygène afin de chauffer le métal en fusion et est partiellement dissout dans le métal en fusion pour augmenter la teneur en carbone du métal, à la suite de quoi le métal en fusion est refroidi de sorte que le graphite en flocons se cristallise en surface, caractérisé par le fait que le charbon est ajouté en injectant du charbon pulvérisé directement dans le métal en fusion, en-dessous de la surface de celui-ci, et par le fait que le charbon pulvérisé est brûlé dans le métal en fusion par l'oxygène.

**2.** Procédé selon la revendication 1, dans lequel le métal en fusion est chauffé par la combustion du charbon pulvérisé dans une première cuve (1), le métal en fusion est transféré à l'état chauffé à une deuxième cuve (2), le métal en fusion est refroidi dans la deuxième cuve, le graphite cristallisé est séparé et le métal en fusion est de nouveau transféré à la première cuve (1) à l'état refroidi.

**3.** Procédé selon la revendication 2, dans lequel, après avoir été chauffé dans la première cuve (1) mais avant d'être refroidi dans la deuxième cuve, le métal en fusion est transporté à une troisième cuve où les scories acheminées avec lui à partir de la première cuve (1) sont séparées.

**4.** Procédé selon la revendication 2 ou la revendication 3, dans lequel, après le chauffage du métal en fusion dans la première cuve (1), du carbone supplémentaire est dissout dans le métal en fusion, dans une quatrième cuve (16).

**5.** Procédé selon l'une des revendications 2 à 4, dans lequel le métal en fusion est autorisé à circuler d'une façon continue à travers les cuves.

**6.** Procédé selon l'une des revendications 1 à 5, dans lequel le charbon pulvérisé est injecté dans le métal en fusion au moyen d'au moins une tuyère (26) et/ou d'une lance.

**7.** Procédé selon l'une des revendications 1 à 6, dans lequel l'oxygène est injecté dans le métal en fusion.

**8.** Procédé selon la revendication 7, dans lequel l'oxygène est injecté dans le métal en fusion par une lance de soufflage d'oxygène.

**9.** Procédé selon l'une des revendications 1 à 8, dans lequel le charbon pulvérisé comprend au moins 70 % en poids de particules d'une taille inférieure à 1 mm.

**10.** Procédé selon la revendication 9, dans lequel le charbon pulvérisé comprend au moins 70 % en poids de particules d'une taille inférieure à 0,3 mm.

**11.** Procédé selon la revendication 10, dans lequel le charbon pulvérisé comprend au moins 70 % en poids de particules d'une taille inférieure à 0,1 mm.

**12.** Procédé selon l'une des revendications 1 à 11, dans lequel le métal en fusion est à base de fer.

**13.** Procédé selon la revendication 12, dans lequel le métal en fusion est de la fonte brute.

**14.** Appareil pour mettre en oeuvre le procédé selon la revendication 1, comprenant au moins une cuve (1, 2) pour contenir un métal en fusion (15), des moyens (16,19,20,26) pour injecter du charbon pulvérisé directement dans le métal en fusion, des moyens (5,26) pour introduire de l'oxygène dans le métal en fusion, un moyen (9) pour refroidir le métal en fusion et des moyens (31,34) pour séparer le graphite en flocons du métal en fusion.

**15.** Appareil selon la revendication 14, comprenant au moins une première cuve (1) pour chauffer le métal en fusion, présentant lesdits moyens d'injection de charbon et lesdits moyens d'introduction d'oxygène, et une deuxième cuve (2) pour refroidir le métal en fusion, présentant ledit moyen de refroidissement.

FIG: 5

## FIG: 1

## FIG: 2

FIG: 3

FIG: 4

T (°C)

% C